Europäisches Patentamt

European Patent Office

Office européen des brevets

(11) Veröffentlichungsnummer: **0 389 788**
**A2**

(12) **EUROPÄISCHE PATENTANMELDUNG**

(21) Anmeldenummer: 90103295.3

(22) Anmeldetag: 21.02.90

(51) Int. Cl.⁵: **B23B 31/02**

(30) Priorität: 20.03.89 DE 3909077
29.11.89 DE 3939422

(43) Veröffentlichungstag der Anmeldung:
**03.10.90 Patentblatt 90/40**

(84) Benannte Vertragsstaaten:
**AT BE CH DE ES FR GB IT LI NL SE**

(71) Anmelder: **Leeb, Felix**
**Zum Espat 3**
**D-8381 Mettenhausen(DE)**

(72) Erfinder: **Leeb, Felix**
**Zum Espat 3**
**D-8381 Mettenhausen(DE)**

(74) Vertreter: **Schön, Theodor, Patent- und**
**Zivilingenieur**
**Sonnleiten 7**
**D-8311 Moosthenning 1(DE)**

(54) Kombination zur Herstellung kreisrunder Ausnehmungen mit stufenlos veränderbarem Durchmesser im vollen Material.

(57) Zur Herstellung von kreisrunden Ausnehmungen, insbesondere wahlweise auch Passungen oder Gewindebohrungen, mit stufenlos veränderlichem Durchmesser im vollen Material, mittels eines durch eine geeignete Maschine, beispielsweise eine CNC-gesteuerte Bohr-oder Fräsmaschine sowohl um seine eigene Achse als auch um die Ausnehmungsachse rotierend angetriebenen, fräsend arbeitenden Werkzeuges, bestehend aus einem mit Stirnschneiden zum Erzeugen einer Kernlochbohrung versehenen Fräser und einer Einspanneinrichtung für diesen, wird eine Kombination von Einspanneinrichtung und Fräserausgestaltung vorgeschlagen bei der teils zur Verringerung des axialen Schneidwiderstandes und teils zur Einstellung eines absoluten Rundlaufes des Fräsers in Verbindung mit einem eine Anzahl dreickförmiger eine V-förmige Schneidgeomtrie bildenden Stirnschneiden aufweisenden Fräser eine Einspannvorrichtung umfasst, die eine wenigstens zwei voneinander unabhängig verstellbare und zu den Schneiden des Fräsers in axialer Richtung gleichliegend am Fräserschaft angreifende Spannbacken aufweisende Spannzange sowie eine im axialen Abstand zu den Anlagepunkten der Spannbacken am Fräserschaft angeordnete als konische Ringfläche ausgebildete Zentrierfläche für den Fräserschaft besitzt.

Fig.1

Die Erfindung bezieht sich auf eine Kombination zur Herstellung von kreisrunden Ausnehmungen, insbesondere wahlweise auch Passungen oder Gewindebohrungen, mit stufenlos veränderlichem Durchmesser im vollen Material, mittels eines durch eine geeignete Maschine, beispielsweise eine CNC-gesteuerte Bohr-oder Fräsmaschine mit Gewindezykluseinrichtung sowohl um seine eigene Achse als auch um die Ausnehmungsachse rotierend angetriebenen, fräsend arbeitenden Werkzeuges, bestehend aus einem mit Stirn-und Flankenschneiden sowie inneren Flankenschneiden zum Erzeugen einer Kernlochbohrung versehenen Fräser und einer Einspanneinrichtung für diesen.

Für die Herstellung von Bohrungsausnehmungen mit stufenlos vergrößerbarem Durchmesser, insbesondere mit Innengewinde versehenen Sacklochbohrungen, im vollen Material ist bereits vorgeschlagen worden (nicht vorveröffentlichte eigene Vorschläge P 38 10 884,4 und P 38 31 046.5) in Verbindung mit einer geeigneten Vorrichtung oder einer entsprechend ausgerüsteten Werkzeugmaschine, beispielsweise einer CNC-gesteuerten Bohr-oder Fräsmaschine ein drehangetriebenes, mit stirnseitig angeordneten Schneiden zur Erzeugung einer Kernlochbohrung versehenes Fräswerkzeug unter gleichzeitigem axialen Vorschub excentrisch um die Bohrlochachse zu führen, derart, daß es bei Verwendung eines einheitlichen Werkzeuges möglich ist ohne Vorbohren auch Gewindebohrungen im vollen Material und mit unterschiedlichen Durchmessern zu erzeugen. Um hierbei eine gute Arbeitsgeschwindigkeit des Fräswerkzeuges zu erreichen ist dort auch bereits vorgesehen, daß im Zentrum des Stirnfräsers ein schneidenfreier, von seitlichen inneren Flankenschneiden begrenzter Raum belassen ist. Diese Ausbildung der Schneidgeometrie bringt eine Reduzierung des axialen Schneidwiderstandes mit sich, so daß die Stirnschneiden mit guter Arbeitsgeschwindigkeit eingesetzt werden können.

Bei Verwendung von austauschbaren Schneidplatten (durchgehende Schneidplatten) besteht jedoch ein Problem die die innere Kernlochbohrung erzeugenden Flankenschneiden hinter die Fräserachse zu verlagern und vor allem. können bei dieser Schneidgeometrie keine Wendeplatten auf Umschlag verwendet werden. Dies trifft auch beim Hohlfräser, vor allem mangels ausreichender Klemmöglichkeit zu, da nicht, wie bekannt, die Wendeplatten nur mit einer Schneidkante zum Einsatz gebracht werden sollen, sondern auf mindestens zwei Schneikanten bzw. bei der Erstellung von einem Gewinde gleich drei Schneidkanten zum Einsatz kommen sollen.

Ferner ist es noch ein allgemeines Problem Fräser auf einfache Weise bzw. überhaupt auf ihre Rundlaufgenauigkeit einstellen zu können.

Der Erfindung liegt die Aufgabe zugrunde Mittel zur Herstellung absolut kreisrunder und wahlweise auch mit einem Innengewinde versehener Bohrungsausnehmungen im vollen Material anzugeben, wobei gegenüber bekannten Einrichtungen dieser Art der auftretende axiale Schneidwiderstand beträchtlich gesenkt und gleichzeitig auch wahlweise eine absolut glattflächig zylindrichse Ausnehmungswandung, beispielsweise bei der Herstellung von Passungen, oder ein Innengewinde sowohl metrischer als auch sonstiger Art erzielt sowie bei der Herstellung von Sacklochbohrungen ein absolut glattflächiger Sacklochboden erzielt werden kann und wobei ferner der Einsatz von Wendeplatten, auch auf Umschlag, für die Scheiden des Fräsers ermöglicht ist. Insbesondere sollen für alle vorkommenden Aufgaben Wendeplatten einheitlicher Ausbildung verwendet und die Schnittgeschwindigkeit auch bei der Erzeugung von Innengewinden erhöht werden können.

Diese Aufgabe wird erfindungsgemäß im wesentlichen durch die Kombination eines besonders gestalteten Fräsers mit einer einen absoluten Rundlauf des Fräsers gewährleistenden Einrichtung, bei der in Verbindung mit einem eine Anzahl dreickförmiger eine V-förmige Schneidgeometrie bildenden Stirnschneiden aufweisenden Fräser und dadurch entstehende Innere- und äußere Flankenschneiden, eine Einspanneinrichtung vorgesehen ist, die eine wenigstens zwei voneinander unabhängig verstellbare und zu den Schneiden des Fräsers gleichliegend am Fräserschaft angreifende Spannbacken aufweisende Spannzange sowie eine im axialen Abstand zu den Anlagepunkten der Spannbacken am Fräserschaft angeordnete als konische Ringfläche ausgebildete Zentrierfläche für den Fräserschaft besitzt, gelöst. Wesentlich ist hierbei auch, eine Ausbildung des Fräsers bzw. eine Anordnung der Schneiden des Fräsers dahingehend, daß jeder der der Erzeugung der Bohrungswandung dienenden Hauptschneiden eine Hilfsschneiden zum Freischneiden des Kernloches zugeordnet ist, wobei im einfachsten Falle vorgesehen sein kann, daß ein mit zwei Hauptschneiden ausgestatteter Fräser wenigstens zwei den Hauptschneiden gegenüber um 90° versetzt angeordnete Hilfsschneiden aufweist. Wesentlich dabei ist ferner, daß daß sämtliche Stirnschneiden auf gleicher Höhe angeordnet sind.

Diese erfindungsgemäße Kombination erlaubt es einen im Übrigen auch allgemein verwendbaren Fräser mit einer Vielzahl von zwecks Verringerung des axialen Schneidwiderstandes mit einer ausgewählten Schneidgeometrie seiner Stirnschneiden versehenen einzusetzen und ohne besonderen Aufwand an Ausrüstung und Arbeitszeit auf absoluten Rundlauf, wie er bei einem mit meheren die Bohrungswandungen erzeugenden Schneiden ausgestatteten Fräser, beispielsweise zur Herstellung von Passungen unbedingt erforderlich ist, einzustellen.

Der Fräser kann hierbei entweder aus Vollmaterial gebildet sein oder aber mit Wendeplatten bestückt sein.

Um bei der Herstellung von Sacklochausnehmungen im vollen Material eine glattflächige Bodenfläche der Sacklochausnehmung zu erzielen ist vorgesehen, daß der Fräser mit einem Mindestversatz von mindestens einem Viertel des Fräserdurchmessers zur Bohrungsachse gefahren wird.

Gemäß einer bevorzugten Verwirklichungsform der Erfindung ist aber vorgesehen, daß die Schneiden des Fräsers von einer möglichen Durchmessergröße an durch Wendeplatten gebildet sind und daß die Schneiden ferner durch Wendeplatten mit gleichschenkelig dreieckförmiger Grunrißform gebildet und die Wendeplatten mit der Basis ihrer Grunrißform parallel zur Fräserachse ausgerichtet am Fräser befestigt sind, wobei die die Hilfsschneiden aufweisenden Wendeplatten kleiner, insbesondere um ca. 1/3 kleiner, sind als die die Hauptschneiden aufweisenden Wendeplatten. Die V-förmige Anordnung der Stirnschneiden ergibt sich hierbei selbsttätig aus der Grundrißform der dreieckförmigen Wendeplatten.

Bei der Anwendung von die Schneiden aufweisenden Wendeplatten an einem Fräser ist gemäß einer bevorzugten einfachen, aber nicht ausschließlichen Einzelausgestaltung der Erfindung zur Befestigung der Wendeplatten am Fräser eine auch allgemein verwendbare Klemmeinrichtumng vorgesehen, die sich dadurch kennzeichnet, daß der Fräserschaftschaft zwei einander diagonal gegenüberliegende, segmentförmige Ausschnitte aufweist, deren zueinander und zur Fräserachse parallelgerichtete Flankenflächen die Anlageflächen für die die Hauptschneiden aufweisenden Wendeplatten bilden und daß die die Hauptschneiden aufweisenden Wendeplatten mittels Spannpratzen am Fräserschaft gehalten sind. Bei der Verwendung von Wendeplatten ist eine sehr zweckmäßige Auführungsform dadurch gekennzeichnet, daß zur Erzeugung eines Innengewindes eine der die Hauptschneiden aufweisenden Wendeplatten um 180° gedreht in einer für die Hilfsschneide vorgesehenen Aufnahme angeordnet ist, derart, daß ihre Spitze in einem Abstand "a" zu der das Kernloch erzeugenden Flankenschneide und um den Betrag der beabsichtigten Gewindetiefe vorsteht, derart, daß ihre Innenschneide die Funktion einer Hilfsschneide übernimmt. Neben der einheitlichen Ausgestaltung aller die Schneiden tragenden Wendeplatten und der daraus resultierenden vereinfachung sowie der daraus resultierenden optimalen Ausnutzung jeder einzelnen Wendeplatte bietet diese Ausführungsform insbesondere den Vorteil einer hohen Schnitt-und Arbeitsgeschwin digkeit bei der Herstellung von mit einem Innengewinde versehenen Ausnehmungen.

Bei größeren Fräsern können naturgemäß auch mehrere Hauptschneiden angebracht sein.

Bei einem mit die Schneiden aufweisenden Wendeplatten bestückten Fräser sind auch die Hilfsschneiden an Wendeplatten mit dreieckförmigem Grundriß angeordnet, wobei gemäß einer bevorzugten Ausgestaltungsform vorgesehen ist, daß die die Hilfsschneiden aufweisenden Wendeplatten an den die die Hauptschneiden aufweisenden Wendeplatten haltenden Spannpratzen angeordnet und über an diesen ausgebildete, senkrecht zur Ebene der die Hauptschneiden aufweisenden Wendeplatten ausgebildete Anlageflächen sowie Befestigungsschrauben gehalten sind, wobei die Anordnung so getroffen ist, daß die Hilfsschneiden nicht bis zur Mitte des Fräsers reichen und die durch diese Anordnung entstehenden inneren Flankenschneiden hinter der Fräserachse angeordnet sind.. Die Befestigungsschrauben sind dabei in an sich bekannter Weise so angeordnet, daß ihre Längsachse mit der Anlagefläche für die Wendeplatten einen Winkel einschließt, um einen Ausgleich für aus dem Schneidwiderstand resultierende Schubkräfte zu erzielen.

Für die Festlegung der die Hauptschneiden aufweisenden Wendeplatten am Fräserschaft ist im Einzelnen vorteilhafterweise vorgesehen, daß die die Hauptschneiden aufweisenden Wendeplatten mit einer über einen Teil ihrer Höhe hin konisch erweiterten Bohrungsausnehmung versehen sind, in die auf der einen Seite ein an der Flankenfläche des Fräserschaftes vorgesehener zylindrischer Aufsatz passgenau eingreift und in die auf der anderen Seite ein an der Spannpratze ausgebildetes kegelstumpfförmiges Eingriffsteil eingreift, wobei einerseits der zylindrische Aufsatz in seinem Fußbereich von einer in die Flankenfläche des Fräserschaftes eingebrachten Ringnut umgeben ist und andererseits mit einem kegelstumpfförmig gestalteten zapfenförmigen Fortsatz in eine entsprechend geformte zentrale Ausnehmung im Eingriffsteil der Spannpratze eingreift. Dadurch wird gewährleistet, daß die Wendeplatte einerseits über ihren passgenauen Sitz am Aufsatz auf der Flankenfläche des Fräserschaftes genau ausgerichtet aufgenommen ist, wobei gleichzeitig die in die Auflagefläche eingebrachte Ringnut bewirkt, daß die Wendeplatten hauptsächlich nur in ihrem Schneidenbereich zum Anliegen kommen. Mittels des mit dem kegelstumpfförmigen Eingriffsteil der Spannpratze zusammenwirkenden, konisch ausgebildeten Teils ihrer Bohrungsausnehmung kann die Wendeplatte ferner gleichzeitig auch verspannt werden, so daß ihre exakte Aufnahme gewährleistet ist.

Um auch die exakte Ausrichtung der Schneiden der die Hauptschneiden aufweisenden Wendeplatten in einfacher Weise zu gewährleisten ist weiter vorgesehen, daß zur Festlegung der die Hauptschneiden aufweisenden Wendeplatten durch eine an ihrer innenliegenden Seite anliegende Welle bzw. Schraube gegen eine senkrecht zu den die Anlagefläche bildenden Flankenflächen gerichtete Ausnehmungswandung des Fräserschaftes abgestützt sind, wobei die Ausnehmungswandung parallel zur Seitenfläche der Wendeplatte angeordnet und unter einem Winkel von exakt 60° zur Fräserachse angestellt ist und wobei die Seitenfläche der Wendeplatte und die Ausnehmungswandung senkrecht zur Flankenfläche des Fräserschaftes unter einem Winkel nach außen hin divergierend angeordnet bzw. ausgebildet sind. Dabei wird die zylindrische Welle über den Anpressdruck, welcher beim Klemmen der Wendeplatten über die Spannpratzen entsteht angepreßt, da die Spannpratze zugleich auf die Welle drückt, was wiederum bewirkt, daß die Wendeplatte exakt in ihrer vorbestimmten Richtung gegen den zylindrischen Aufsatz des Fräserschaftes gedrückt wird, was einen totalen spielfreien Sitz und naturgemäß auch eine 100%ig genaue Flucht der Schneiden zur Fräserachse gewährleistet.

Das vorstehend im Einzelnen mit Bezug auf einen Fräser zur Anwendung in Verbindung mit der erfindungsgemäßen Kombination beschiebene und im Wesentlichen aus einer Schneidplatte mit durchgehender Bohrung, einer mit einem Aufsatz versehenen Anlagefläche am Fräserschaft, einer Spannpratze mit Eingriffsteil und einer zylindrischen Welle mit zugeordneter richtungsgebender Anlagefläche bestehende Klemmsystem kann in entsprechend abgewandelter Anordnung auch bei jedem beliebien anderen Fräser, z.B. einem Hohlfräser angewandt werden.

Sofern der nach einer bevorzugten Verwirklichungsform der Erfindung mit an Wendeplatten angebrachten Schneiden ausgestattete Fräser zur Erzeugung von mit einem Innengewinde versehenen Bohrungsausnehmungen eingesetzt werden soll kann dieser in einfacher Weise dadurch mit einem Gewindeschneidzahn ausgestattet werden, daß zur Erzeugung eines Innengewindes eine bzw. mehrere der die Hauptschneiden aufweisenden Wendeplatten um 180° gedreht angeordnet ist bzw. sind, derart, daß die Spitze ihrer dreieckförmigen Grundrißform um den Betrag der beabsichtigten Gewindetiefe über die die Kernlochbohrung erzeugenden Schneiden vorsteht. Dadurch übernimmt ihre Innenschneide automatisch die Funktion der Hilfsschneiden, wobei jede der drei vorhandenen Schneiden einer Wendeplatte vor allem auch den für den beabsichtigten Einsatz erforderlichen Hinterschliff aufweist, derart, daß durch gegenseitigen Austausch alle verfügbaren Schneiden zum Einsatz gebracht werden können.

Der in der bevorzugten Ausgestaltungsform der Erfindung mit die Hauptschneiden aufweisenden, im Grundriß dreieckförmigen Wendeplatten ausgestattete Fräser kann auch zur Erzeugung nicht metrischer Gewinde, beispielsweise Zollgewinde eingesetzt werden, wobei dann vorgeshen ist, daß zur Erzeugung nicht metrischer Innengewinde im Bereich der Spitze der dreieckförmigen Grundrißform der die Hauptschneiden aufweisenden Wendeplatten die Schneidkanten bildenden Seiten der Wendeplatten eingeknickt sind derart, daß im Bereich der Sptize ein von der geometrischen Form eines gleichschenkeligen Dreieckes abweichender Winkel, z.B. zum Schneiden eines Zoll-Gewindes ein Winkel von 55° vorhanden ist.

Einspanneinrichtung für die Kombination aus einem Fräser und einer Einspannvorrichtung ist in besonderer Ausgestaltung weiterhin, dadurch gekennzeichnet, daß sie einen Schaftteil aufweist, der wenigstens einen Aufnahmeabschnitt zum Einsetzen in ein Spannfutter und einen die Spannzange aufnehmenden hülsenförmigen Abschnitt mit sich von oben nach unten konisch verjüngendem Innendurchmesser umfasst sowie mit einer als koaxial ausgerichtete ringförmige Zentrierfläche ausgebildeten Anlagefläche für eine am oberen Endbereich des Fräserschaftes angeordnete Kegelfläche versehen ist und an diese noch eine zylindrischer Schaft angeschlossen ist, welcher nahezu spielfrei in eine zugehörige Fläche der Aufnahme eingreift und wobei ferner die Änderung der Spanngrößen durch einfaches Auswechseln der Spannbacken erfolgen kann. Die Anordnung eines sich von oben nach unten konisch verjüngenden Innendurchmessers des Hülsenteiles des Schaftteiles ermöglicht es in Verbindung mit dem Merkmal, daß die Spannbacken der Spannzange im wesentlichen glattflächige Außenumfangsflächen, gegebenenfalls mit länglichen Freimachungen, aufweisen, und den Fräser zugleich auch gegen in axialer Richtung wirkende Zugkräfte zuverlässig abzustützen, so daß auf die bisher erfoderlichen zusätzlichen Mittel für diese Abstützung verzichtet werden kann.

In weiterer Ausgestaltung der Einspanneinrichtung ist ferner vorgesehen, daß die Spannbacken über den wesentlichen Teil ihrer Länge hin freitragend gestaltet und in ihrem unteren Endbereich an ihren Innenumfangsflächen wenigstens drei, vorzugsweise punkt-oder linienförmig ausgebildete Anlageelemente aufweisen, über die sie in ihrer gespannten Wirklage am Außenumfang des Fräserschaftes anliegen. Daraus ergibt sich eine stabile Halterung des Fräsers durch die Spannbacken, die insbesondere im Zusammenwirken mit der oberendigen Abstützung des Fräserschaftes an einer konischen ringförmigen Zentrierfläche eine exakte Ausrichtung des Fräsers bewirkt, unbeschadet der Möglichkeit durch Verstellen des Anpressdruckes der einzelnen Anlageelemente der Spannbacken auch eine Ausrichtung des Fräsers auf Rundlauf bewirken zu können.

In einer einfachen und hinsichtlich der Handhabung beim Einstel len des Fräsers auf Rundlauf vorteilhaften Ausgestaltung ist hierbei vorgesehen, daß der Einstellung der Spannbacken diese unter einem Winkel zur Fräserachse angestellt durchsetzende Schraubenbolzen zugeordnet sind, die an einer quer zu dessen Achse ausladen am Fräserschaft angeordneten Kegelfläche angreifen, wobei die Kegelfläche mit den Achsen der Schraubenbolzen vorzugsweise einen rechten Winkel einschließt. Die den Spannbacken zugeordneten Schraubenbolzen sind dabei zum Einstellen der Spannung bzw. der Anpresskraft der einzelnen Spannbacken mittels eines Werkzeuges von außen her vermittels im Hülsenabschnitt des Schaftteiles angebrachter Langlöcher zugänglich und beim Lösen der Spanneinrichtung mit ihrem Kopf jeweils gegen eine senkrecht zu ihrer Achse ausgerichtet am Innenumfang des Hülsenabschnittes angebrachten Anlagefläche abgestützt. Letztere Maßnahme gewährleistet, daß die Spannbacken beim Lösen der Einspannung des Fräsers durch die Schraubenbolzen nach unten in ihre Lösestellung bewegt werden können.

In weiterer Einzelausgestaltung der erfindungsgemäßen Einspannvorrichtung ist ferner auch noch vorgesehen, daß die Spannbacken der Spannzange im unbelasteten Zustand mittels zwischen ihnen angeordneter Federelemente, insbesondere Kissen aus federnd elastisch verformbaren Material, beispielsweise Gummi, in einer Spreizstellung gehalten sind und daß die beiden Spannbacken der Spannzange im Bereich ihres unteren Endes mittels eines Ringes derart miteinander gekoppelt sind, daß eine längsgerichtete Verschiebebewegung der einen Spannbacke teilweise auch auf die andere Spannbacke übertragen wird.

Um ein einfaches Einsetzen des Fräsers in die Einspannvorrichtung zu erreichen sieht die Erfindung weiterhin vor, daß im Bereich dessen oberen Endes am Fräserschaft eine durch parallel zur Fräserachse gerichtete von der die Anlage für die Stellschrauben der Spannbackenspannung bildenden Kegelfläche ausgehende und in die der Zentrieffläche im Hülsenabschnitt mündende Nuten gebildete Bajonett-Verriegelungseinrichtung zugeordnet ist, wobei die Nuten auch bei mehr als zwei Hauptschneiden immer neben den Schneiden liegen müssen. Dabei könnte es aber vorteilhaft sein, daß beispielsweise bei Fräsern mit drei Schneiden eine Aufnahme mit drei Spannbacken zum Einsatz kommt. Dadurch kann der Fräser von unten her in geradliniger axialer Bewegung in die Einspannvorrichtung eingeschoben und anschließend um einen Winkelbetrag verdreht werden, so daß er auf der einen Seite gegen ein Herausfallen durch diese Bajonettverriegelung gesichert ist und auf der anderen Seite seine Hauptschneiden in eine zu den Spannbacken fluchtende Lage gebracht worden sind. Zur Einstellung des Rundlaufes des Fräsers werden anschließend die Schraubenbolzen angezogen und somit die Spannbacken vorläufig an den Fräserschaft angepresst. Sollte sich eine Rundlaufabweichung herausstellen, so kann durch Lösen oder zusätzliches Anziehen der einzelnen Schraubenbolzen eine Ausrichtung des Fräsers auf absoluten Rundlauf erzielt werden.

Bei Fräsern, die mehr Hauptschneiden aufweisen als die Einspanneinrichtung an Spannbacken aufweist kann die Rundlaufeinstellung so durchgeführt werden, daß man einmal ganz wahllos einspannt und wenn man dabei eine Unwucht bzw. Rundlaufabweichung feststellt, die Spannbacken nochmals löst und den Fräser solange um seine Achse verdreht, bis die am weitesten vorstehende Schneide zu einem der Spannbacken der Einspanneinrichtung fluchtend ausgerichtet ist, wodurch dann durch erneutes gegebenenfalls unsymmetrisches Anziehen der Spannbacken der Rundlauf des Fräsers hergestellt werden kann. Dabei ist bei Wendelnutfräsern als fluchtende Lage der Schneiden diejenige Stellung anzunehmen, bei der der Übergang von Stirn- zu Flankenschneide mit der Spannbacke fluchtend ausgerichtet ist. Mit diesem Fräserspannverfahren sind auch ganz große Fräser sicher einspannbar und auf Rundlauf einstellbar. Dabei müßte dann die Aufnahme in einem Stück samt kegeligem Schaft gefertigt sein, wobei auch dann dort, wie an sich schon bekannt, auf einfache Weise über die Fräseraufnahme Kühlmittel zugeführt werden kann.

In vielen Fällen ist es auch wünschenswert dem Schneidenbereich des Fräsers durch die Fräserachse hindurch ein Kühlmittel, bei spielsweise eine Flüssigkeit oder Druckluft zuzuleiten, wozu es an sich bekannt ist den Fräserschaft mit einer entsprechenden axialen Bohrung auszustatten und im Bereich der Einspannung des Fräsers eine Druckluft oder Flüssigkeitszufuhr vorzusehen. Die hierfür bekannten und gebräuchlichen Einrichtungen sind jedoch teuer und aufwendig.

In Verbindung mit einer Einspanneinrichtung der vorstehend aufgezeigten Bauweise schlägt die Erfindung daher ferner vor, daß am Schaftteil zwischen dem Einspannabschnitt und dem Hülsenabschnitt ein weiterer, zylindrischer Abschnitt vorgesehen ist, an dem vermittels eines Paares luft- und flüssigkeitsdichter Kugellager ein einen Anschlußnippel für eine Luft-oder Flüssigkeitszufuhrleitung aufweisende Ringkörper gelagert ist und daß sowohl das Schaftteil als auch der Fräserschaft in an sich bekannter Weise mit einer zentralen Bohrungsausnehmung für die Heranführung von Luft oder Flüssigkeit an die Schneiden des Fräsers versehen sind.

Die Erfindung ist in der nachfolgenden Beispielsbeschreibung anhand eines in der zeichnung dargestellten Ausführungsbeispieles im Einzelnen beschrieben . In der zeichnung zeigt die

Figur 1 einen Längsschnitt durch die erfindungsgemäße Kombination;

Figur 2 einen Schnitt durch den Fräser der erfindungsgemäßen Kombination entlang der Linie B - B;

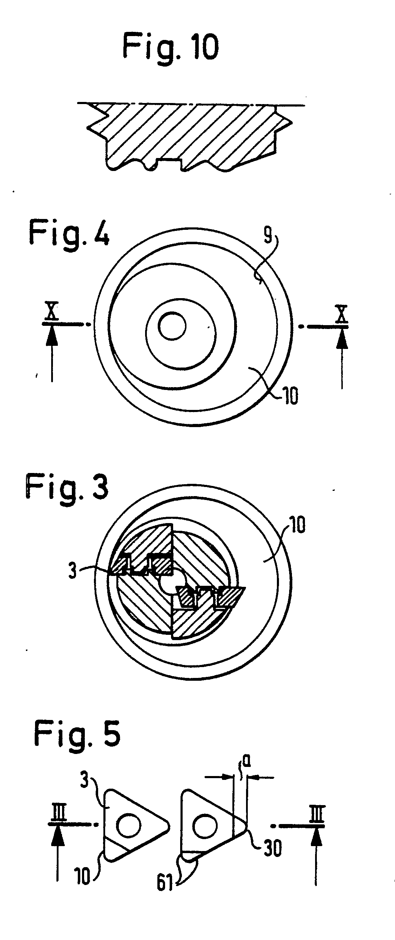

Figur 3 einen Schnitt durch den Fräser einer erfindungs gemäßen Kombination entlang der Linie E - E, bei der Erstellung einer Gewindebohrung;

Figur 4 eine Draufsicht auf die Arbeitsfläche einer erfindungsgemäßen Kombination während des Gewindefräsens;

Figur 5 eine schematische Darstellung der Anordnung zweier die Hauptschneiden aufweisender Wendeplatten in Seitenansicht und in einer zur Erstellung von Gewinden geeigneten Anordnung;

Figur 6 eine Draufsicht auf eine Befestigung der die Hauptschneiden aufweisenden Wendeplatten, ausgelegt zum Gewindefräsen;

Figur 7 einen Schnitt durch die Wendeplattenbefestigung nach Figur 6 entlang der Linie A - A;

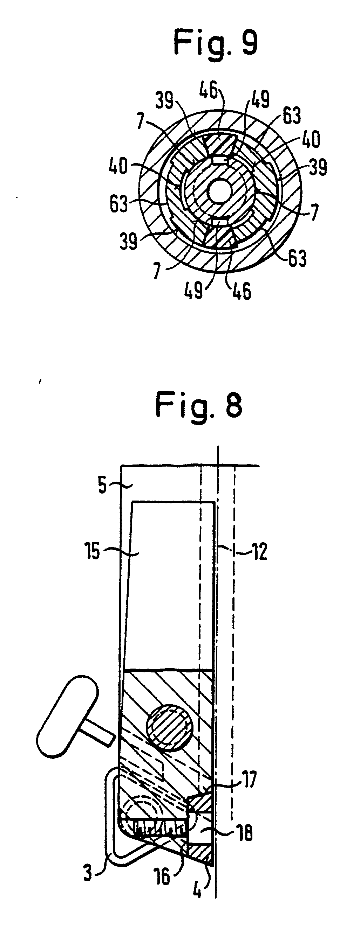

Figur 8 eine aufgebrochende Darstellung der Anordnung der die Hilfsschneiden tragenden Wendeplatten;

Figur 9 einen Schnitt entlang der Linie C - C durch die Einspanneinrichtung für den Fräser;

Figur 10 einen Schnitt D - D bei der Erstellung einer Gewindebohrung.

Figur 11 eine Draufsicht auf die Befestigung einer einheitlichen Ausführungsform der die Hauptschneiden aufweisenden Wendeplatten, ausgelegt zum Gewindefräsen;

Figur 12 einen Schnitt durch die Wendeplattenbefestigung nach Figur 11;

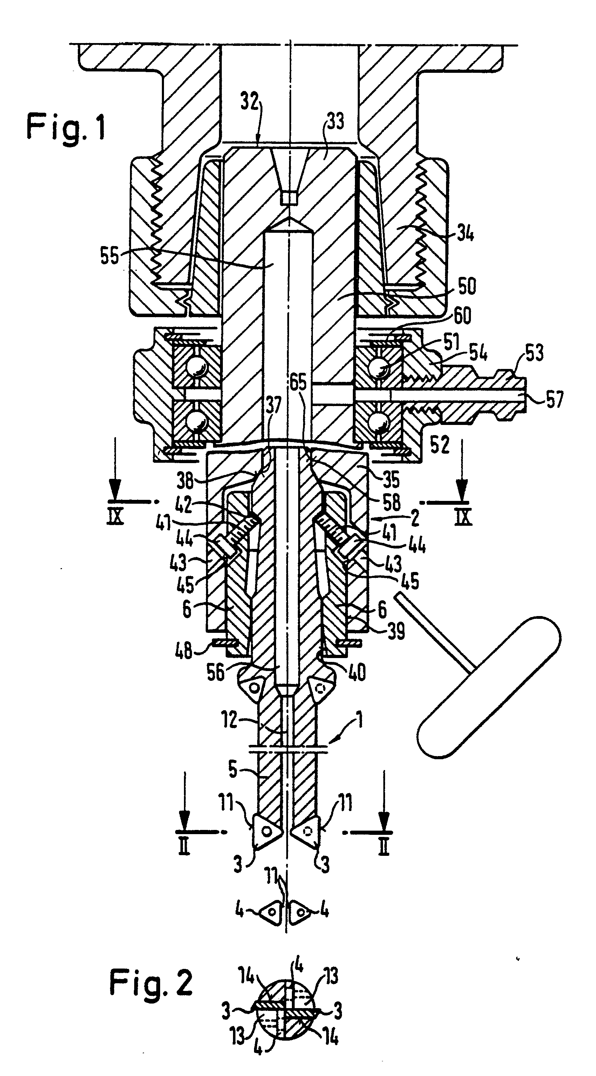

In der Figur 1 ist eine erfindunggemäße Kombination eines besonders gestalteten Fräsers 1 mit einer in einfacher Weise die Einstellung eines absoluten Rundlaufes des Fräsers 1 gewährleistenden Einrichtung 2, dargestellt wobei der in Verbindung mit einem eine Anzahl dreickförmiger eine V-förmige Schneidgeometrie bildenden Stirnschneiden 3 und 4 aufweisenden Fräser 1 eine Einspanneinrichtung 2 vorgesehen ist, die eine zwei voneinander unabhängig verstellbare und zu den Stirnschneiden 3 des Fräsers 1 fluchtend gleichliegend am Fräserschaft 5 angreifende Spannbacken 6 aufweisende Spannzange sowie eine im axialen Ab stand zu den Anlagepunkten 7 der Spannbacken 6 am Fräserschaft 5 angeordnete als konische Ringfläche 38 ausgebildete Zentrierfläche für den Fräserschaft 5 besitzt. Der Fräser 1 kann entweder aus Vollmaterial bestehen oder, wie im Ausführrungsbeispiel dargestellt mit Wendeplatten bestückt sein. Dre Fräser 1 weist jedoch in jedem Fall zwischen zwei der Erzeugung der Bohrungswandung 9 dienenden Hauptschneiden 3 wenigstens zwei den Hauptschneiden 3 gegenüber um 90° versetzt angeordnete Hilfsschneiden 4 zum Freischneiden des Kernloches 10 auf wobei die Schneidenanordnung so getroffen ist, daß sämtliche Stirnschneiden 3 und 4 auf gleicher Höhe angeordnet sind.

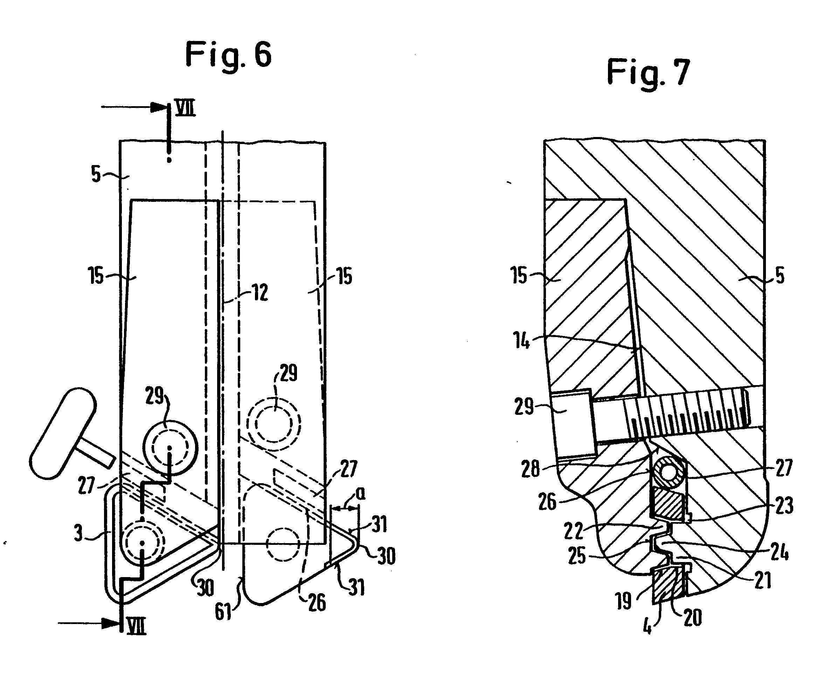

Bei dem in der Zeichnung dargestellten Ausführungsbeispiel ist aber vorgesehen, daß die Schneiden 3 und 4 des Fräsers 1 durch Wendeplatten mit gleichschenkelig dreieckförmiger Grunrißform gebildet und die Wendeplatten mit der Basis 11 ihrer Grunrißform parallel zur Fräserachse 12 ausgerichtet am Fräserschaft 5 befestigt sind, wobei die die Hilfsschneiden 4 aufweisenden Wendeplatten kleiner, insbesondere um ca. 1/3 kleiner, sind als die die Hauptschneiden 3 aufweisenden Wendeplatten. Zur Befestigung der die Hauptschneiden 3 aufweisenden Wendeplatten ist der Fräserschaftschaft 5 an seinem unteren Ende mit zwei einander diagonal gegenüberliegenden, segmentförmigen Ausschnitten 13 versehen, deren parallel zur Fräserachse 12 gerichtete Flankenflächen 14 die Anlageflächen für die die Hauptschneiden 3 aufweisenden Wendeplatten bilden. Die die Hauptschneiden 3 aufweisenden Wendeplatten sind mittels Spannpratzen 15 am Fräserschaft 5 gehalten, während die die Hilfsschneiden 4 aufweisenden Wendeplatten an den die die Hauptschneiden 3 aufweisenden Wendeplatten haltenden Spannpratzen 15 angeordnet und über an diesen ausgebildete, senkrecht zur Ebene der die Hauptschneiden 3 aufweisenden Wendeplatten ausgebildeten Anlageflächen 16 sowie zu diesen ihrerseits senkrecht stehenden Stützflächen 17 vermittels Befestigungsschrauben 18 gehalten sind. Die Befestigungsschrauben 18 sind dabei in einem Winkel zur Anlagefläche 16 ausgerichtet angeordnet. Die Festlegung der die Hauptschneiden 3 aufweisenden Wendeplatten Umfasst eine über einen Teil 19 ihrer Höhe hin konisch erweiterte Bohrungsausnehmung 20 in der Wendeplatte und einen in deren zylindrischen Teil 20 passgenau eingreifenden, an der Flankenfläche 14 des Fräserschaftes 5 vorgesehenen zylindrischen Aufsatz 21 und ferner ein an der Spannpratze 15 ausgebildetes kegelstumpfförmiges Eingriffsteil 22, welches in den konischen Abschnitt 19 der Ausnehmung 20 der Wendeplatte eingreift.Um die Wndeplatte im Bereich ihrer Einspannung spannungsfrei zu halten ist der zylindrische Aufsatz 21 in seinem Fußbereich von einer in die Flankenfläche 14 des Fräserschaftes 5 eingebrachten Ringnut 23 umgeben. Der Aufsatz 21 ist mit einem kegelstumpfförmig gestalteten zapfenförmigen Fortsatz 24 versehen, der in eine entsprechend geformte zentrale Ausnehmung 25 im Eingriffsteil 22 der Spannpratze 15 eingreift. Die Festlegung der Ausrichtung der die Hauptschneiden 3 aufweisenden Wendeplatten wird durch eine an ihrer innenliegenden Seite 26 anliegende Welle 27 bewirkt, wobei die Walze 27 gegen eine senkrecht zu den die Anlagefläche für die Wendeplatten bildenden Flankenflächen 14 gerichtete Ausnehmungswandung 28 des Fräserschaftes 5 abgestützt ist, und wobei die Ausnehmungswandung 28 unter einem Winkel von exakt 60° zur Fräserachse 12 ausgerichtet ist und wobei ferner die Seitenfläche 26 der Wendeplatte und die Ausnehmungswandung 28 unter einem Winkel nach außen hin divergierend angeordnet bzw. ausgebildet sind. Die Spann- pratzen 15 sind mit dem Fräserschaft 5 vermittels Schraubenbolzen 29 verspannt, wobei sie sich an ihrem hinteren Ende gegen die Flankenflächen 14 abstützen. Zur Erzeugung eines Innengewindes ist, wie in der Figur 6 dargestellt, eine der die Hauptschneiden 3 aufweisenden Wendeplatten um 180° gedreht angeordnet ist, derart, daß ihre Spitze 30 in einem Abstand"a" zu den das Kernloch 10 erzeugenden Stirnschneiden 3 bzw. um den Betrag der beabsichtigten Gewindetiefe über den Außenumfang des Fräserschaftes 5 vorsteht bzw. der erzeugenden Kernlochfrässchneide (3) vorsteht.

Gemäß einer in der Zeichnung nicht im Einzelnen gezeigten weiteren Ausführungsform kann weiterhin auch ein Abwandlung der Grundrißform der die Hauptschneiden 3 aufweisenden Wendeplatten dahin gehend vorgesehen sein, daß zur Erzeugung nicht metrischer Innengewinde im Bereich der Spitze 30 der dreieckförmigen Grundrißform der die Hauptschneiden 3 aufweisenden Wendeplatten die Schneidkanten 31 bildenden Seiten 26 der Wendeplatten eingeknickt sind derart, daß im Bereich der Spitze 30 ein von der geometrischen Form eines gleichschenkeligen Dreieckes abweichender Winkel, z.B. zum Schneiden eines Zoll-Gewindes ein Winkel von 55° vorhanden ist.

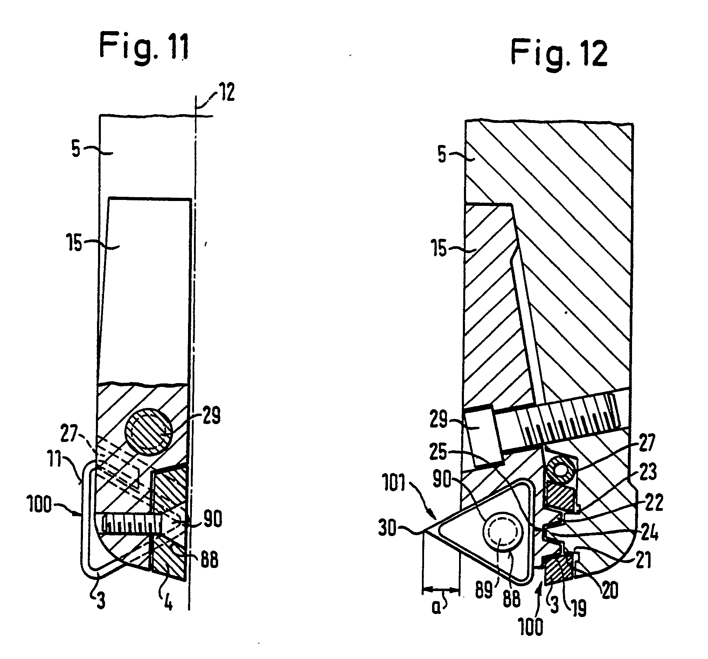

Bei der in den Figuren 11 und 12 dargestellten Ausführungsform ist der Fräser 1 mit Wendeplatten 100 und 101 mit gleichschenkelig dreieckförmiger Grundrißform bestückt, wobei die Wedeplatten mit der Basis 11 ihrer Grundrißform parallel zur Fräserachse 12 ausgerichtet sind. Zur Erzeugung eines Innengewindes ist, gemäß der Figur 12 eine der die Hauptschneiden 3 aufweisenden Wendeplatten 100 um 180° gedreht angeordnet, derart, daß ihre Spitze 30 in einem Abstand "a" zu den das Kernloch erzeugenden Stirnschneiden 3 bzw. um den Betrag der beabsichtigten Gewindetiefe über den Außenumfang des Fräserschaftes 5 vorsteht. Die zweite, die Hilfsschneide 4 und den Gewindeschneidzahn bildende Wendeplatte 101 ist dabei vermittels eines, insbesondere ballig ausgeführten in eine Ausnehmung 88 in der Wendeplatte 101 eingreifenden Ansatzes 89 einer Befestigungsschraube 90 an der die erste, die Hauptdschneide aufweisenden, Wendeplatte 100 am Fräserschaft 5 haltenden Spannpratze 15 befestigt.

Die Einspanneinrichtung für die erfindungsgemäße Kombination weist einen im allgemeinen 32 bezeichneten Schaftteil auf, der einen Aufnahmeabschnitt 33 zum Einsetzen in die allgemein mit 34 bezeichnete Aufnahmefutter und einen die aus den Spannbacken 6 gebildete Spannzange aufnehmenden hülsenförmigen Abschnitt 35 mit sich von oben nach unten konisch verjüngendem Innendurchmesser auf. In seinem Grunde weist der hülsenförmige Abschnitt 35 eine konische als koaxial ausgerichtete ringförmige Zentrierfläche 37 ausgebildete Anlagefläche für eine am oberen Endbereich des Fräserschaftes 5 angeordnete Kegelfläche 38 auf. Die Spannbacken 6 der Spannzange bestizen im wesentlichen glattflächige Außenumfangsflächen 39 mit Freimachungen 63 und sind an ihren Innenumfangsflächen 40 mit drei, vorzugsweise punkt-oder linienförmig ausgebildeten Anlageelementen 7 versehen, über die sie in ihrer gespannten Wirklage am Außenumfang des Fräserschaftes 5 anliegen. Zur Einstellung der Spannung bzw. der Anpresskraft der Anlageelemente 7 der Spannbacken 6 am Fräserschaft 5 dienen die Spannbacken 6 unter einem Winkel zur Fräserachse 12 angestellt durchsetzende Schraubenbolzen 41 die an einer quer zu dessen Achse 12 ausladend am Fräserschaft 5 angeordneten Kegelfläche 42 angreifen, wobei die Kegelfläche 42 mit den Achsen der Schraubenbolzen 41 annähernd einen rechten Winkel einschließt. Die den Spannbacken 6 zugeordneten Schraubenbolzen 41 sind von außen her vermittels im Hülsenabschnitt 35 des Schaftteiles 32 angebrachter Langlöcher 43 zugänglich und beim Lösen der Spanneinrichtung mit ihrem Kopf 44 jeweils gegen eine senkrecht zu ihrer Achse ausgerichtet am Innenumfang des Hülsenabschnittes angebrachten Anlagefläche 45 abgestützt. Im unbelasteten Zustand sind die Spannbacken 6 der Spannzange mittels zwischen ihnen angeordneter Federelemente 46, insbesondere Kissen aus federnd elastisch verformbaren Material in einer Spreizstellung gehalten. Ferner sind die beiden Spannbacken 6 der Spannzange im Bereich ihres unteren Endes mittels eines Ringes 48 derart miteinander gekoppelt sind, daß eine längsgerichtete Verschiebebewegung der einen Spannbacke 6 teileise auch auf die andere Spannbacke 6 übertragen wird.

Im Bereich dessen oberen Endes ist am Fräserschaft 5 eine durch parallel zur Fräserachse 12 gerichtete von der die Anlagefläche 42 für die Stellschrauben 41 der Spannbackenspannung bildenden Kegelfläche ausgehende und in die der Zentrierfläche 37 im Hülsenabschnitt 35 zugeordnete Kegelfläche des Fräserschaftes 5 mündende Nuten 49 gebildete Bajonett-Verriegelungseinrichtung vorgesehen, wobei die Nuten 49 jeweils zu den Schneiden 3 des Fräsers 1 um einen Winkelbetrag, vorzugsweise einen Winkelbetrag von 90° versetzt angeordnet sind. Aus der Darstellung der Figur 1 ergibt sich schließlich noch, daß am Schaftteil 32 zwischen dem Einspannabschnitt 33 und dem Hülsenabschnitt 35 ein weiterer, zylindrischer Abschnitt 50 vorgesehen ist, an dem vermittels seines Paares luft-und flüssigkeitsdichter Kugellager 51, 52 ein einen Anschlußnippel 53 für eine nich weiter dargestellte Luft-oder Flüssigkeitszufuhrleitung aufweisender Ringkörper 54 gelagert ist und daß sowohl das Schaftteil 32 als auch der Fräserschaft 5 in an sich bekannter Weise mit einer zentralen Bohrungsausnehmung 55 bzw. 56 für die Heranführung von Luft oder Flüssigkeit an die Schneiden 3 und 4 des Fräsers 1 versehen sind. Der Ringkörper 54 und das Schaftteil 32 weisen ferner noch radial gerichtete Durchtrittsöffnungen 57 auf. Durch Druckscheiben 60 wird die Funktion der Dichtringe bei den Lagern unterstützt. Am Fräserschaft 5 ist eine zylindrische Fäche 58 vorgesehen, welche passgenau in eine zylindrische Fläche 65 der Fräseraufnahme 32 eingreift.

**Ansprüche**

1) Kombination zur Herstellung von kreisrunden Ausnehmungen, insbesondere wahlweise auch Passungen, Sacklochausnehmungen oder Gewindebohrungen, mit stufenlos veränderlichem Durchmesser im vollen Material, mittels eines durch eine geeignete Maschine, beispielsweise eine CNC-gesteuerte Bohr-oder Fräsmaschine sowohl um seine eigene Achse als auch um die Ausnehmungsachse rotierend angetriebenen und mit fortlaufender Z-Achsen-Zustellmöglichkeit fräsend arbeitenden Werkzeuges, bestehend aus einem mit Stirnschneiden zum Erzeugen einer Kernlochbohrung versehenen Fräser und einer Einspanneinrichtung für diesen, dadurch gekennzeichnet, daß in Verbindung mit einem eine Anzahl dreickförmiger eine V-förmige Schneidgeometrie bildenden Stirnschneiden (3 und 4) aufweisenden Fräser (1) und dadurch entstehenden inneren und äußeren Flankenschneiden (11) eine Einspanneinrichtung (2), vorgesehen ist, die eine wenigstens zwei voneinander unabhängig verstellbare und zu den Schneiden (3 und 4) des Fräsers (1) in axialer Richtung gleichliegend am Fräserschaft (5) angreifende Spannbacken (6) aufweisende Spannzange sowie eine im axialen Abstand zu den Anlagepunkten der Spannbacken (6) am Fräserschaft (5) angeordnete als konische Ringfläche ausgebildete Zentrierfläche (37) für den Fräserschaft (5) besitzt.

2) Zum Einatz in Verbindung mit der Kombination nach Anspruch 1, aber auch zum allgemeinen Einsatz geeigneter Fräser, dadurch gekennzeichnet, daß jeder der der Erzeugung der Bohrungswandung dienenden Hauptschneiden (3) eine Hilfsschneide (4) zum Freischneiden des Kernlochmittels zugeordnet ist und daß sämtliche Stirnschneiden (3 und 4) auf gleicher Höhe angeordnet sind und wobei ferner sämtliche Schneiden zum Mitlauffräsen angeordnet sind.

3) Fräser nach Anspruch 1, dadurch gekennzeichnet, daß die Schneiden (3 und 4) des Fräsers (1) durch Wendeplatten mit gleichschenkelig dreieckförmiger Grunrißform gebildet und die Wendeplatten (3) mit der Basis (11) ihrer Grunrißform parallel zur Fräserachse (12) ausgerichtet am Fräser(1) befestigt sind.

4) Fräser nach einem der Ansprüche 1 bis 3, dadurch gekennzeichnet, daß zur Erzeugung eines Innengewindes eine (101) der die Hausptschneiden (3) aufweisenden Wendeplatten (100) um 180° gedreht in einer für die Hilfsschneide (4) vorgesehenen Aufnahme angeordnet ist, derart, daß ihre Spitze (30) in einem Abstand "a" zu der das Kernloch erzeugenden Flankenschneide (11) und um den Betrag der beabsichtigten Gewindetiefe vorsteht, derart, daß ihre Innenschneide (61) die Funktion einer Hilfsschneide (4) übernimmt.

5) Fräser nach Anspruch 3 und 4, dadurch gekennzeichnet, daß die die Hilfsschneiden (4) aufweisenden Wendeplatten kleiner, insbesondere um ca. 1/3 kleiner, sind als die die Hauptschneiden (3) aufweisenden Wendeplatten und einen speziellen Hinterschliff aufweisen.

6) Fräser mit einer Klemmeinrichtung für Wendeplatten, dadurch gekennzeichnet, daß der Fräserschaft (5) zwei einander diagonal gegenüberliegende, segmentförmige Ausschnitte (13) aufweist, deren parallel zur Fräserachse (12) gerichtete Flankenflächen (14) die Anlageflächen für die die Hauptschneiden (3) aufweisenden Wendeplatten bilden und daß die die Hauptschneiden (3) bildenden Wendeplatten mittels Spannpratzen (15) am Fräserschaft (5) gehalten sind.

7) Fräser nach Anspruch 6, dadurch gekennzeichnet, daß die die Hilfsschneiden (4) aufweisenden Wendeplatten an den die die Hauptschneiden (3) aufweisenden Wendeplatten haltenden Spannpratzen (15) angeordnet und über an diesen ausgebildete, senkrecht zur Ebene der die Hauptschneiden (3) aufweisenden Wendeplatten ausgebildete Anlageflächen (16) sowie Befestigungsschrauben (18) gehalten sind, und wobei die Anordnung so ausgerichtet ist, daß die Schneiden (11) nicht bis zur Mitte des Fräsers reichen und die aus dieser Anordnung entstehenden inneren Flankenschneiden hinter der Fräserachse plaziert sind..

8) Fräser nach Anspruch 6 und 7, dadurch gekennzeichnet, daß die die Hauptschneiden (3) aufweisenden Wendeplatten mit einer über einen Teil (19) ihrer Höhe hin konisch erweiterten Bohrungsausnehmung (20) versehen sind, in die auf der einen Seite ein an der Flankenfläche (14) des Fräserschaftes (5) vorgesehener zylindrischer Aufsatz (21) passgenau eingreift und in die auf der anderen Seite ein an der Spannpratze (15) ausgebildetes kegelstumpfförmiges Eingriffsteil (22) eingreift, wobei einerseits der zylindrische Aufsatz (21) in seinem Fußbereich von einer in die Flankenfläche (14) des Fräserschaftes (5) eingebrachten Ringnut (23) umgeben ist und andererseits mit einem kegelstumpfförmig gestalteten zapfenförmigen Fortsatz (24) in eine entsprechend geformte zentrale Ausnehmung (25) im Eingriffsteil (22) der Spannpratze (15) eingreift.

9) Fräser nach Anspruch 7 bis 8, dadurch gekennzeichnet, daß zur Festlegung der Ausrichtung der die Hauptschneiden (3) aufweisenden und durch die Spannpratze (15) angedrückten Wendeplatten (3) eine zylindrische Welle (27), welche an die Fläche (26) der Wendeplatten (3) sowie an die Ausnehmungswandung (28) des Fräserschaftes (5) angepreßt ist, vorgesehen ist, wobei die Ausnehmungswandung (28) unter einem Winkel von genau 60° zur Fräserachse (12) angestellt ist und wobei die Seitenfläche (26) der Wendeplatte (3) und die Ausnehmungswandung (28) unter einem Winkel nach außen hin divergierend angeordnet bzw. ausgebildet sind.

10) Fräser nach Anspruch 7 bis 9, dadurch gekennzeichnet, daß zur Erzeugung eines Innengewindes eine der die Hauptschneiden (3) aufweisenden Wendeplatten um 180° gedreht angeordnet ist, derart, daß ihre Spitze (30) in einem Abstand "a" zu der das Kernloch erzeugenden Flankenschneide (11) und um den Betrag der beabsichtigten Gewindetiefe vorsteht und daß ihre Innenschneide (61) dadurch automatisch die Funktion der Hilfsschneiden (4) übernimmt, wobei jede der drei vorhandenen Schneiden in seiner Form und vor allem auch für den geplanten Einsatz den nötigen Hinterschliff aufweist, derart, daß durch gegenseitigen Austausch alle verfügbaren Schneiden zum Einsatz gebracht werden können.

11) Fräser nach Anspruch 10, dadurch gekennzeichnet, daß zur Erzeugung nicht metrischer Innengewinde im Bereich der Spitze (30) der dreieckförmigen Grundrißform die die Hauptschneiden (3) aufweisenden Wendeplatten die Schneidkanten (31) bildenden Seiten (26) der Wendeplatten eingeknickt sind derart, daß im Bereich der Spitze (30) ein von der geometrischen Form eines gleichschenkeligen Dreieckes abweichender Winkel, z.B. zum Schneiden eines Zoll-Gewindes ein Winkel von 55° vorhanden ist, wobnei die Schneidkanten (31) auch jeder anderen bekannten Gewindeform entsprechend ausgebildet sein können.

12) Einspanneinrichtung für die Kombination nach Anspruch 1 oder auch zur allgemeinen Anwendung, dadurch gekennzeichnet, daß sie einen Schaftteil (32) aufweist, der wenigstens einen Aufnahmeabschnitt (33) zum Einsetzen in eine Fräseraufnahme (34) und einen die Spannzange aufnehmenden hülsenförmigen Abschnitt (35) mit sich von oben nach unten konisch verjüngendem Innendurchmesser umfasst sowie mit einer als koaxial ausgerichtete ringförmige Zentrierfläche (37) ausgebildeten Anlagefläche für eine am oberen Endbereich des Fräserschaftes (5) angeordnete Kegelfläche (64) versehen ist und an dieser noch ein zylindrischer Schaft (65) angeschlossen ist, welcher nahezu spielfrei in die Fläche (58) der Aufnahme eingreift und wobei ferner die Änderung der Spanngrößen durch einfaches Auswechseln der Spannbacken (6) erfolgen kann.

13) Einrichtung nach Anspruch 12, dadurch gekennzeichnet, daß die Spannbacken (6) der Spannzange im wesentlichen glattflächige Außenumfangsflächen (39), gegebenenfalls mit länglichen Freimachungen (63) und an ihren im wesentlichen freitragend angeordneten Innenumfangsflächen und in ihrem unteren Endbereich insgesamt wenigstens drei, vorzugsweise punkt-oder linienförmig ausgebildete Anlageelemente (7) aufweisen, über die sie in ihrer gespannten Wirklage am Außenumfang des Fräserschaftes (5) anliegen.

14) Einrichtung nach Anspruch 12 und 13, dadurch gekennzeichnet, daß der Einstellung der Spannbacken (6) diese unter einem Winkel zur Fräserachse (12) angestellt durchsetzende Schraubenbolzen (41) zugeordnet sind, die an einer quer zu dessen Achse (12) ausladend am Fräserschaft (5) angeordneten Kegelfläche (42) angreifen, wobei die Kegelfläche (42) mit den Achsen der Schraubenbolzen (41) vorzugsweise einen rechten Winkel einschließt.

15) Einrichtung nach Anspruch 12 bis 14, dadurch gekennzeichnet, daß die den Spannbacken (6) zugeordneten Schraubenbolzen (41) von außen her vermittels im Hülsenabschnitt (35) des Schaftteiles (32) angebrachter Langlöcher (43) für ein Werkzeug zugänglich und beim Lösen der Spanneinrichtung mit ihrem Kopf (44) jeweils gegen eine senkrecht zu ihrer Achse ausgerichtet am Innenumfang des Hülsenabschnittes (35) angebrachten Anlagefläche (45) abgestützt sind.

16) Einrichtung nach Anspruch 12 bis 15, dadurch gekennzeichnet, daß die Spannbacken (6) der Spannzange im unbelasteten Zustand mittels zwischen ihnen angeordneter Federelemente (46), insbesondere Kissen aus federnd elastisch verformbaren Material in einer Spreizstellung gehalten sind.

17) Einrichtung nach Anspruch 12 bis 16, dadurch gekennzeichnet, daß die beiden Spannbakken (6) der Spannzange im Bereich ihres unteren Endes mittels eines Ringes (48) derart miteinander gekoppelt sind, daß eine längegerichtete Verschiebebewegung der einen Spannbacke (6) teilweise auch auf die andere Spannbacke (6) übertragen wird.

18) Einrichtung nach Anspruch 12 bis 17, dadurch gekennzeichnet, daß im Bereich dessen oberen Endes am Fräserschaft (5) eine durch parallel zur Fräserachse (12) gerichtete von der die Anlage für die Stellschrauben (41) der Spannbackenspannung bildenden Kegelfläche (42) ausgehende und in die der Zentrierfläche (37) im Hülsenabschnitt zugeordneten Kegelfläche mündende Nuten (49) gebildete Bajonett-Verriegelungseinrichtung zugeordnet ist, wobei die Nuten (49) jeweils zu den Schneiden (3) des Fräsers (1) um einen Winkelbetrag versetzt angeordnet sind.

19) Einrichtung nach Anspruch 12 bis 18, dadurch gekennzeichnet, daß am Schaftteil (32) zwischen dem Einspannabschnitt (33) und dem Hülsenabschnitt (35) ein weiterer, zylindrischer Abschnitt ( 50) vorgesehen ist, an dem vermittels eines Paares luft-und flüssigkeitsdichter Kugellager (51, 52) ein einen Anschlußnippel (53) für eine Luftoder Flüssigkeitszufuhrleitung aufweisende Ringkörper (54) gelagert ist und daß sowohl das Schaftteil (32) als auch der Fräserschaft (5) in an sich bekannter Weise mit einer zentralen Bohrungsausnehmung (55/56) für die Heranführung von Luft oder Flüssigkeit an die Schneiden (3) des Fräsers (1) versehen sind und die Dichtungen der Kugellager (51, 52) durch anliegende Druckscheiben (60) in ihrem Wirkungsgrad unterstützt werden.

Fig. 1

Fig. 2

## Fig. 10

## Fig. 4

9

X          X

10

## Fig. 3

10

3

## Fig. 5

a

3

III          III

10

61

30

Fig. 7

Fig. 6

# Fig. 9

# Fig. 8

# Fig. 11

# Fig. 12